# EUROPÄISCHE PATENTANMELDUNG

(11) **EP 1 013 162 A1**
(43) Veröffentlichungstag der Anmeldung: **28.06.2000**
(21) Anmeldenummer: 99124699.2
(22) Anmeldetag: 11.12.1999
(51) Int. Cl.: A01D 80/02

(54) **Federzinkenanordnung für landwirtschaftliche Arbeitsmaschine**

(30) Priorität: 23.12.1998 DE 19859922
(71) Anmelder: CLAAS SAULGAU GMBH, D-88340 Saulgau (DE)
(72) Erfinder: Deni, Franz, 88348 Saulgau (DE)

(57) **Zusammenfassung**

Die Erfindung betrifft eine Federzinkenanordnung für landwirtschaftliche Arbeitsmaschinen, insbesondere eine Heuwerbungsmaschine, deren als Rechkreisel (1) ausgeführten Arbeitsorgane um eine zum Boden geneigte Drehachse (5) umlaufen und die über radial zur Drehachse (5) verlaufende Tragarme (2) verfügt, wobei jeder Tragarm (2) wenigstens einen lösbar mit dem jeweiligen Tragarm (2) verbundenen, wenigstens eine Einspannstelle (11), eine Federwicklung (12) und zumindest eine Zinkenspitze (13, 13a) aufweisenden Federzinken (10, 16) aufnimmt, wobei der Federzinken (10, 16) so am Tragarm (2) befestigt ist, daß die Zinkenspitze (13, 13a) bei Einwirkung äußerer Kräfte (F_{Q}) gegen die Lage der Federwicklungen (12) ausweichen kann. Auf diese Weise wird sichergestellt, daß durch die Auslenkung der Zinkenspitze (13a, 13) keine Reduzierung der Elastizität der Federwicklungen (12) eintritt, wodurch funktionsbeeinträchtigende Verformungen oder Brüche des Federzinkens (10, 16) vermieden werden.

## Beschreibung

Die Erfindung betrifft eine Federzinkenanordnung für landwirtschaftliche Arbeitsmaschinen, insbesondere Heuwerbungsmaschinen gemäß dem Oberbegriff des Patentanspruchs 1.
Derartige Federzinken sind in der Regel als U-förmige Doppelfederzinken oder als L-förmige, nur eine Zinkenspitze aufweisende Einfachfederzinken ausgeführt. Aus dem umfangreichen Stand der Technik sei hier die europäische Patentanmeldung EP 0 336 513 zitiert, die eine Kombination aus Einfach- und Doppelfederzinken offenbart. Einem Zinkentragarm ist in einer Ausführungsform im radial äußeren Bereich ein schwenkbarer Adapter zugeordnet, der innenseitig einen Doppelfederzinken und außenseitig einen Einfachfederzinken lösbar aufnimmt. Der Einfachfederzinken wird von einer hackenförmigen Einspannstelle und einem ihr nachgeordneten Block von Federwicklungen, die außenseitig in die Zinkenspitze übergehen, gebildet. Der Einfachfederzinken ist so an dem schwenkbaren Adapter fixiert, daß die Zinkenspitze über den Adapter hinausragt und die Einspannstelle innerhalb dieses Adapters ausgebildet ist. Während des Arbeitsvorganges greift jede Zinkenspitze in das vor ihr liegende Erntegut ein. In Abhängigkeit von der Zinkenbeschleunigung und der durch den jeweiligen Zinken bewegten Gutmenge, greift an der zugehörigen Zinkenspitze eine Kraft an, die zu einer Auslenkung der Zinkenspitze und damit zu einer Verdrehung der Federwicklungen führt. Eine hohe Gutfeuchte aufweisendes, sogenanntes schweres Erntegut leitet dabei schwerkraftbedingt zusätzlich eine mehr oder weniger große Kraftkomponente in Richtung der Rechkreiselmitte ein, wodurch die Zinkenspitzen zusätzlich in Richtung der Rechkreiselmitte ausgelenkt werden. An jeder in radialer Richtung außerhalb der zugehörigen Einspannstelle liegenden Zinkenspitze führt diese Auslenkung der Zinkenspitze dazu, daß sich die Vorspannung der gegeneinander gepreßten Federwicklungen weiter erhöht. Ergebnis dieses Vorganges ist eine Abnahme der Elastizität der Federwicklungen, wobei im Extremfall eine derart hohe Vorspannung erreicht werden kann, daß die Elastizität der Federwicklungen gänzlich verlorengeht. In diesem Fall führt die beschriebene Auslenkung der in radialer Richtung außerhalb der zugehörigen Einspannstelle liegenden Zinkenspitzen zu deren Verformung oder bei entsprechend hohen dynamischen Belastungen zu einem Bruch des Zinkens im Bereich der Einspannstelle oder am Übergang zwischen der Zinkenspitze und den Federwicklungen. Sowohl die Zinkenverformung als auch der Zinkenbruch beeinträchtigen die Arbeitsqualität der Heuwerbungsmaschine und verursachen neben reparaturbedingten Ausfallzeiten hohe Wartungs- und Instandhaltungskosten, vorallem auch an nachfolgenden Erntesystemen, die durch Aufnahme der verlorengegangenen Zinken Beschädigungen an ihren Arbeitsorganen erfahren.

Der Erfindung liegt deshalb die Aufgabe zugrunde, eine Federzinkenanordnung für landwirtschaftliche Arbeitsmaschinen, insbesondere Heuwerbungsmaschinen gemäß dem Oberbegriff des Patentanspruchs 1 so zu gestalten, daß in radialer Richtung an der Zinkenspitze angreifende Kräfte zum Auslenken der Federzinken entgegen der ihnen nachgeordneten Federwicklungen erfolgt, so daß deren Elastizität erhalten bleibt und das Auftreten von Zinkenverformungen und - brüchen vermieden wird. Erfindungsgemäß wird die Aufgabe durch eine Federzinkenanordnung für landwirtschaftliche Arbeitsmaschinen, insbesondere Heuwerbungsmaschinen mit den kennzeichnenden Merkmalen des Patentanspruchs 1 gelöst.

Durch die Anordnung eines durch Einspannstelle, Federwicklung oder Federwicklungen und Zinkenspitze gebildeten Federzinkens in der Weise am Tragarm einer Heuwerbungsmaschine, daß eine in Richtung Rechkreiselmitte an der Zinkenspitze angreifende Kraft zu einem Auslenken der Zinkenspitze entgegen der Federwicklung oder Federwicklungen führt, wird sichergestellt, daß durch die Auslenkung des Zinkens keine Reduzierung der Elastizität der Federwicklungen eintritt, wodurch funktionsbeeinträchtigende Verformungen oder Brüche des Federzinkens vermieden werden.

Auf konstruktiv einfache Weise kann die Auslenkung der Zinkenspitze entgegen der Federwicklung oder Federwicklungen dadurch erreicht werden, daß die Einspannstelle in Achsrichtung des Tragarms weiter außen als die Federwicklungen und die ihnene nachgeordnete Zinkenspitze liegt.

In einer weiteren vorteilhaften Ausfuhrungsform kann einer im Endbereich des Tragarms in radialer Richtung angeordneten Einspannstelle eines Federzinkens ein Anschlag zugeordnet sein, der bei kollisionsbedingt auftetendem Zinkenbruch eine konstruktiv einfache, in Achsrichtung des Tragarms wirkende Zinkenverlustsicherung bildet.

In einer weiteren vorteilhaften Ausführungsform kann die Auslenkung der Zinkenspitze entgegen der Federwicklung oder Federwicklungen dadurch erreicht werden, daß der Federzinken in vertikaler Richtung am Tragarm adaptiert ist und die Einspannstelle in vertikaler Richtung oberhalb der Federwicklungen und der Zinkenspitze liegt.

In vorteilhafter Weise kann die Zinkenspitze radial und/oder tangential zur Drehachse der Arbeitsorgane geneigt sein, so daß neben einer weiteren Erhöhung der Elastizität des Federzinkens bei dessen Neigung in Richtung des radial außen liegenden Endes des Tragarms zudem eine große Arbeitsbreite der Heuwerbungsmaschine erreicht wird.

Eine große Arbeitsbreite und eine intensive Bearbeitung des Erntegutes wird auch immer dann erreicht, wenn in einer weiteren vorteilhaften Ausgestaltung der Erfindung jedem Tragarm mehrere Federzinken zugeordnet sind. Zur Verringerung des lastabhängigen Verschleißes der Federzinken können bei einer derartigen Ausführung zudem die Zinken unterschiedlichen Querschnitt aufweisen, wobei die durch eine größere zu transportierende Gutmenge höher belasteten äußeren Federzinken gegenüber den weiter innen angeordneten Federzinken über den größeren Querschnitt verfügen.

In einer weiteren vorteilhaften Ausführungsform können die Federzinken eines Tragarms so ausgeführt sein, daß die einzelnen Zinkenspitzen um so länger sind, je weiter außen der jeweilige Federzinken am Tragarm adaptiert ist. Auf diese Weise kann sichergestellt werden, daß alle Zinkenspitzen den gleichen geringen, die Gutaufnahme begünstigenden Abstand zum Boden aufweisen.

In vorteilhafter Weiterbildung der Erfindung können in vertikaler Richtung am Tragarm adaptierte Federzinken im Bereich ihrer jeweiligen Einspannstelle mittels eines gemeinsamen Adaptierbolzens am jeweiligen Tragarm adaptiert sein, wobei ein Federzinken innerhalb der Federwicklung oder der Federwicklungen des anderen Federzinkens angeordnet ist. Auf diese Weise ergibt sich eine sehr kompakte, einen geringen Bauraum benötigende Anordnung der Federzinken am Tragarm.

Vorteilhafte Ausgestaltungen sind Gegenstand weiterer Unteransprüche und werden nachfolgend anhand mehrerer in Zeichnungen dargestellter Ausführungsbeispiele näher beschrieben.

Es zeigen
- Figur 1: einen Ausschnitt einer erfindungsgemäßen Heuwerbungsmaschine in Seitenansicht
- Figur 2: eine Detailansicht einer erfindungsgemäßen Zinkenanordnung für einen abgewinkelt ausgeführten Tragarm

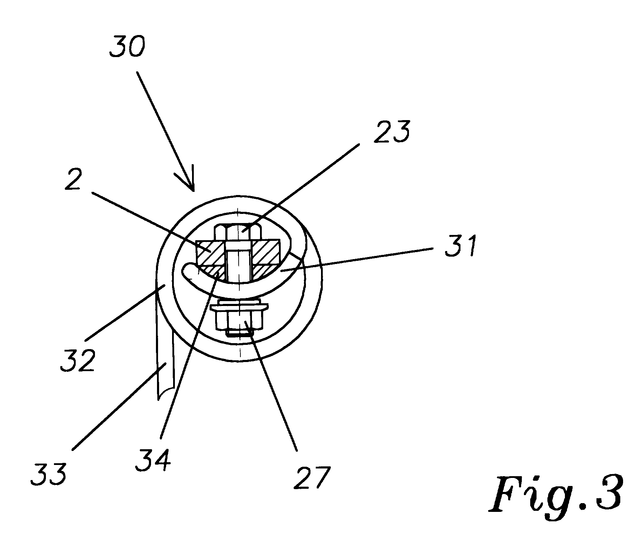

- Figur 3: eine Schnittdarstellung entlang der Schnittlinie III-III in Figur 2

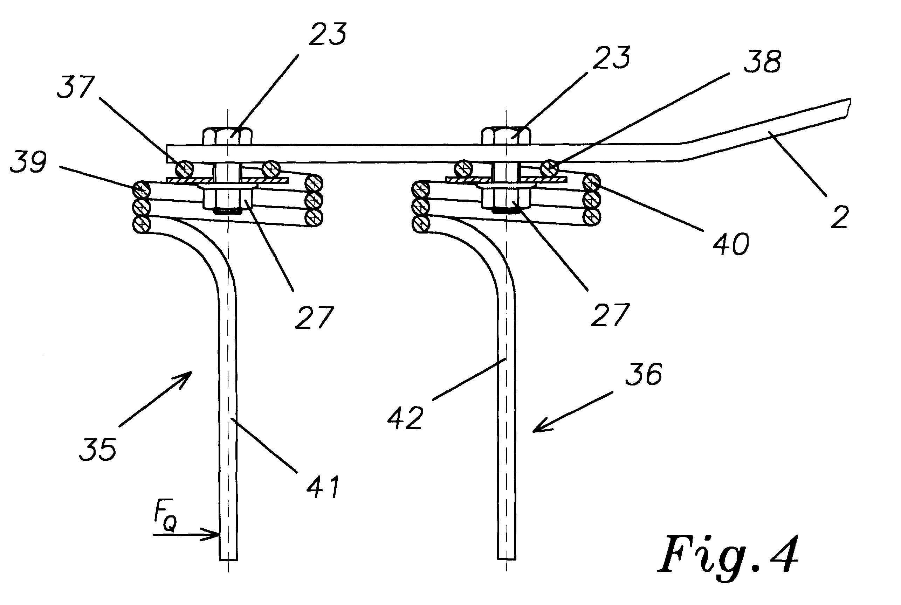

- Figur 4: eine Detailansicht einer erfindungsgemäßen Zinkenanordnung für vertikal am Tragarm angeordnete Federzinken

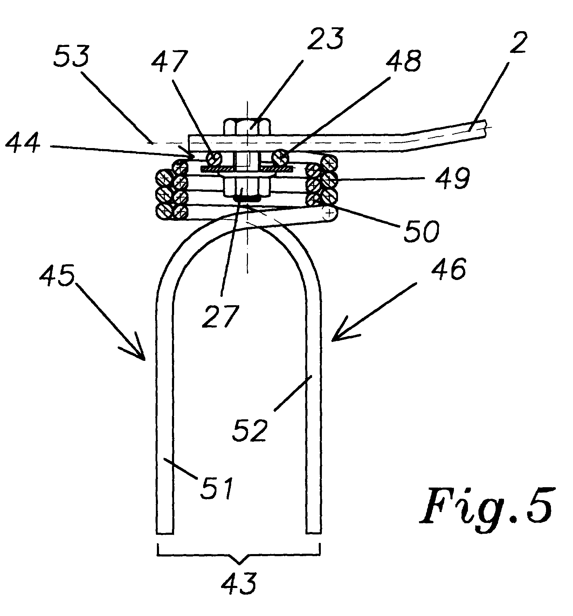

- Figur 5: eine Detailansicht einer erfindungsgemäß kompakten Ausführung eines vertikal am Tragarm angeordneten Doppelfederzinkens

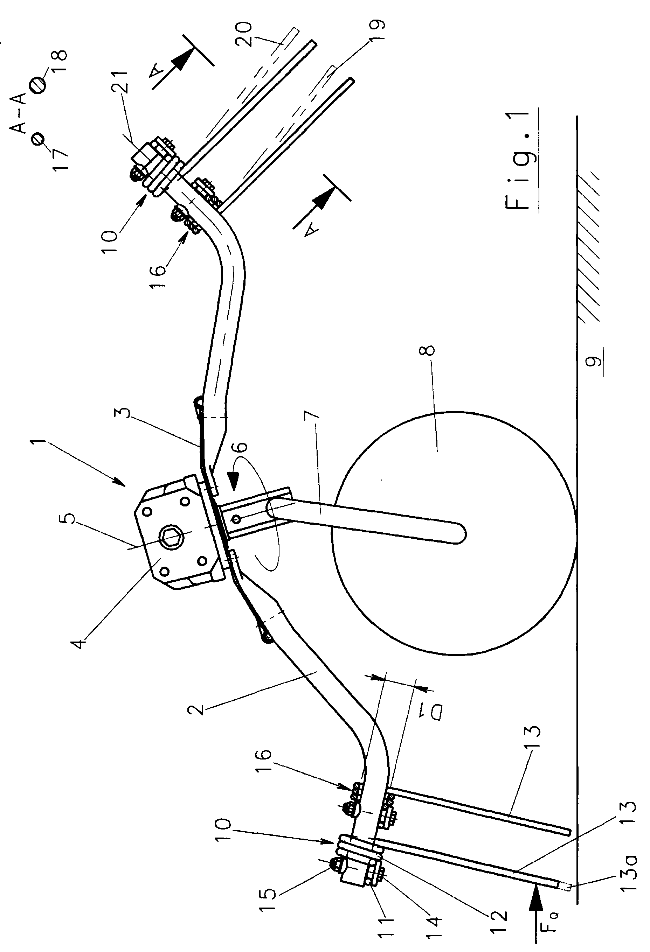

Figur 1 zeigt das als Rechkreisel 1 ausgeführte Arbeitsorgan einer an sich bekannten und deshalb nicht näher dargestellten Heuwerbungsmaschine, die wenigstens einen derartigen Rechkreisel 1 aufnimmt. Gebildet wird Rechkreisel 1 von einem die Tragarme 2 aufnehmenden tellerförmigen Adapter 3, dem obenseitige ein nicht näher dargestelltes Getriebe 4 zugeordnet ist, welches den Rechkreisel 1 in eine Drehbewegung um die annähernd vertikal verlaufende Achse 5 gemäß Pfeilrichtung 6 versetzen kann. Die Tragarme 2 können wie dargestellt gekröpft oder gestreckt ausgeführt sein. Jeder Rechkreisel 1 verfügt über eine beliebig gestaltete Laufradachse 7, die in ihrem untenseitigen Bereich ein Laufrad 8 aufnimmt, über welches der Rechkreisel 1 am Boden 9 abgestützt wird.
In seinem dem Adapter 3 abgewandten Endbereich nimmt in einem ersten Ausführungsbeispiel jeder Tragarm 2 wenigstens einen Federzinken 10 auf, wobei zur Intensivierung der Gutbearbeitung und zur Überdeckung einer großen Arbeitsbreite jedem Tragarm 2 auch zwei oder mehr derartige Federzinken 10, 16 zugeordnet sein können. Die einstückig ausgeführten Federzinken 10, 16 verfügen über eine ösen- oder hackenförmige Einspannstelle 11, die in einen Federwicklungen 12 aufweisenden Bereich übergeht, der schließlich in der Zinkenspitze 13 ausläuft. Der Innendurchmesser D1 der Federwicklungen 12 ist dabei so bemessen, daß der Tragarm 2 durch die Federwicklungen 12 hindurchgeführt werden kann. Erfindungsgemäß sind die nur eine Zinkenspitze 13 aufweisenden Federzinken 10, 16 in einer ersten Ausführungsform so am Tragarm 2 adaptiert, daß die Einspannstelle 11 jedes Federzinkens 10, 16 dem freien Ende des Tragarms 2 und die Zinkenspitze 13 dem in den Adapter 3 mündenden Ende des Tragarms 2 zugewandt ist. Im Bereich der Einspannstelle 11 wird der Tragarm 2 und die Einspannstelle 11 von einem Adaptierbolzen 14, der im einfachsten Fall als Schraube ausgeführt ist durchsetzt. Mittels Mutter 15 oder anderer, an sich bekannter Verbindungselemente erfolgt die Fixierung des Federzinkens 10, 16 am Tragarm 2. Aufgrund dessen, daß die Einspannstelle 11 weiter außen am Tragarm 2 angeordnet ist als die Zinkenspitze 13, führen erntegut- oder kollisionsbedingte, zusätzlich an der Zinkenspitze 13 angreifende Querkräfte F_{Q} zu einer Auslenkung der Zinkenspitze 13 entgegen den Federwicklungen 12. Auf diese Weise ist sichergestellt, daß die hieraus resultierende Querbewegung der Zinkenspitze 13 nicht zu einer Verringerung der Elastizität der Federwicklungen 12 führt, was letztlich einen höheren Verschleiß der Federzinken 10, 16 verursachen würde.

Sind an einem Tragarm 2 mehrere Federzinken 10, 16 angeordnet, so überstreicht der jeweils äußere Federzinken 10 einen größeren Arbeitsbereich und muß folglich auch die größere Erntegutmenge transportieren. Um das Verschleißverhalten mehrerer, an einem Tragarm 2 angeordneter Federzinken 10, 16 einander anzugleichen, können die Federzinken 10, 16 unterschiedlichen Querschnitt 17, 18 aufweisen, wobei der jeweils weiter außen liegende Federzinken 10 über den größeren Querschnitt 18 verfügt.

Zur Realisierung einer großen Arbeitsbreite können die Zinkenspitzen 19, 20 eines oder mehrerer Federzinken 10, 16 auch in und quer zur Achsrichtung 21 des jeweiligen Tragarms 2 gemäß der gestrichelten Darstellung in Figur 1 geneigt ausgeführt sein.

Sind die Federzinken 10, 16 auf gekröpft ausgeführten Tragarmen 2 angeordnet kann der jeweils weiter außen am Tragarm 2 adaptierte Federzinken 10 mit einer längeren Zinkenspitze 13a ausgestattet sein, so daß alle Zinkenspitzen 13, 13a der Federzinken 10, 16 den gleichen geringen, die Gutannahme verbessernden Abstand zum Boden 9 haben.

Verfügen die Tragarme 2 über mehr als die dargestellten zwei Federzinken 10, 16 so liegt es im Rahmen der Erfindung, daß sich zur Erreichung der oben beschriebenen Effekte alle Federzinken im Querschnitt, in der Länge ihrer Zinkenspitzen und deren Neigung unterscheiden können.

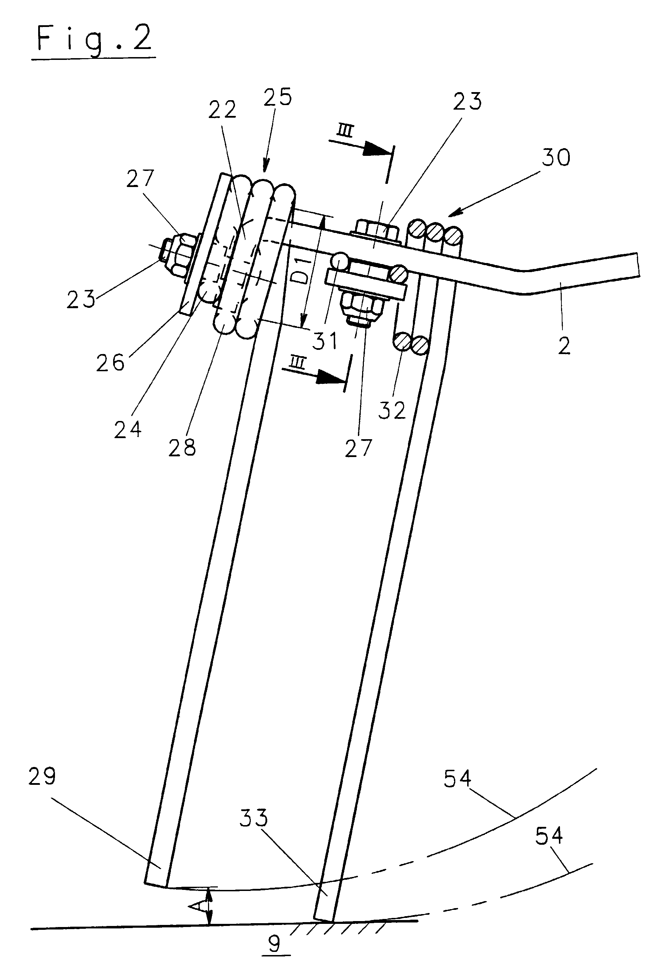

Sind die Tragarme 2 wie aus dem Stand der Technik bekannt flachprofilig ausgeführt, so kann deren freies Ende entsprechend Figur 2 abgewinkelt ausgeführt sein, wobei der abgewinkelte Bereich 22 von einem im einfachsten Fall als Schraube 23 ausgeführten Adaptierbolzen durchsetzt ist, der außerhalb des Tragarms 2 die Einspannstelle 24 eines Federzinkens 25 und einen Anschlag 26 aufnimmt und diese mittels Mutter 27 miteinander verbindet. Anschlag 26 ist dabei so bemessen, daß er den Innendurchmesser D1 der Federwicklungen 28 wenigstens teilweise überdeckt, wodurch sich eine konstruktiv einfache Zinkenverlustsicherung ergibt, die bei dennoch auftretendem Bruch des Federzinkens 25 im Bereich der Federwicklungen 28, die Bewegung des dann auf dem Tragarm 2 frei beweglichen Federzinkens 25 in axialer Richtung begrenzt. Aufgrund dessen, daß die Einspannstelle 24 in einer Flucht mit den Federwicklungen 28 des Federzinkens 25 angeordnet ist, wird zudem die Möglichkeit einer einfachen Verstellung der Lage des Federzinkens 25 am Tragarm 2 geschaffen. Durch Lösung der Schraubverbindung 23, 27 kann der Federzinken 25 stufenlos in jede beliebige Lage am Federzinken 2 verdreht werden, womit eine bessere Anpassung des Federzinkens 25 an das zu bewegende Erntegut erreicht wird. Außerdem kann bei steinigem oder sehr unebenem Boden zur Vermeidung von Kollisionen der Zinkenspitze 29 mit dem Boden 9 jeder beliebige Abstand A zwischen Zinkenspitze 29 und Boden 9 voreingestellt werden. Wird einem derartig ausgeführten Federzinken 25 zur Verbesserung der Gutmitnahme wenigstens ein weiterer Federzinken 30 zugeordnet, so muß dessen Einspannstelle 31 winklig zu den ihr nachgeordneten Federwicklungen 32 angeordnet sein, damit eine konstruktiv einfache Adaptierung des Federzinkens 30 am flachprofiligen Tragarm 2 gewährleistet wird. Um jedoch ebenfalls eine stufenlose Veränderung der Lage der Zinkenspitze 33 zum Boden 9 und zum Erntegut zu erreichen, ist die winklig zu den Federwicklungen 32 angeordnete Einspannstelle 31 über ein untenseitig am Tragarm 2 im Bereich der Schraubverbindung 23, 27 angeordnetes, eine Kugeloberfläche aufweisendes Distanzstück 34 gewölbt, so daß bei gelöster Schraubverbindung 23, 27 der Federzinken 30 um Tragarm 2 stufenlos verdreht werden kann.

Damit das bodenseitige Ende der Zinkenspitzen 13, 13a, 29, 33 der in radialer Richtung am Tragarm 2 angeordneten Federzinken 10, 16, 25, 30 durch den Einfluß der Querkraft F_{Q} nicht in Richtung Boden 9 verschwenkt wird, ist in einer weiteren vorteilhaften Ausführung vorgesehen, das freie Ende der Zinkenspitzen 13, 13a, 29, 33 in vertikaler Richtung unterhalb der jeweiligen Einspannstelle 11, 24, 31 anzuordnen. Auf diese Weise wird sichergestellt, daß sich das bodenseitige Ende der Zinkenspitzen 13, 13a, 29, 33 unter dem Einfluß der Querkraft F_{Q} gemäß der in Figur 2 für die Zinkenspitzen 29 und 33 dargestellten Kurvenbahn 54 bewegt. Auf die Weise wird vermieden, daß beim Verschwenken der Zinkenspitzen 13, 13a, 29, 33 um die jeweilige Einspannstelle 11, 24, 31 eine deformationsbegünstigende Kollision zwischen Zinkenspitze 13, 13a, 29, 33 und Boden 9 eintritt.

In einer weiteren erfindungsgemäßen Ausführungsform können der oder die Federzinken 35, 36 auch in vertikaler Richtung am Tragarm 2 angeordnet sein, wobei der jeweiligen Einspannstelle 37, 38 untenseitig die in vertikaler Richtung verlaufenden Federwicklungen 39, 40 zugeordnet sind, die dann jeweils in einer sich ebenfalls in vertikaler Richtung erstreckenden Zinkenspitze 41, 42 auslaufen. Bei einer derartigen Gestaltung und Anordnung der Federzinken 35, 36 rufen an der Zinkenspitze 41, 42 angreifende Querkräfte F_{Q} ein Verdrehen der Federwicklungen 39, 40 hervor, während die durch den Guttransport an der Zinkenspitze 41, 42 angreifenden, nicht näher dargestellten Kräfte ein Ausweichen der jeweiligen Zinkenspitze 41, 42 entgegen den Federwicklungen 39, 40 verursacht, so daß auch hier keine verschleißfördernde Verringerung der Elastizität der Federwicklungen 39, 40 eintritt. Die Federzinken 35, 36 sind wie bereits beschrieben einfachstenfalls durch Schraubverbindungen 23, 27 am Tragarm 2 fixiert.

Auch für mehrere vertikal am Tragarm 2 angeordnete Federzinken 35, 36 gilt, daß die Federzinken 35, 36 eines Tragarms 2 verschiedenen Querschnitt aufweisen können, wobei der jeweils weiter außen am Tragarm 2 angeordnete Federzinken 35 über den größeren Querschnitt verfügt. Zudem können die Federzinken 35, 36 eines Tragarms 2 gemäß der oben bschriebenen Effekte mit unterschiedlich langen sowie verschieden geneigten Zinkenspitzen 41, 42 ausgerüstet sein.

Zur Erreichung einer sehr kompakten Bauweise kann auch ein vertikal am Zinkenträger 2 angeordneter einstückig ausgeführter Doppelfederzinkens 43 vorgesehen sein, der im Bereich seiner Einspannstelle 44 mittels Schraubverbindung 23, 27 am Tragarm 2 fixiert ist. In aufgelöster Bauweise kann dieser Doppelfederzinken 43 auch durch zwei, jeweils nur eine Zinkenspitze 51, 52 aufweisende Federzinken 45, 46 simuliert werden, wobei deren Einspannstellen 47, 48 durch eine gemeinsame Schraubverbindung 23, 27 am Tragarm 2 adaptiert sind. Die an die Einspannstellen 47, 48 anschließenden Federwicklungen 49, 50 sind so bemessen, daß die Federwicklungen 50 des einen Federzinkens 46 innerhalb der Federwicklungen 49 des äußeren Federzinkens 45 liegen. Zur Realisierung einer großen Arbeitsbreite können einerseits die Zinkenspitzen 51, 52 des Doppelfederzinkens 43 oder der Federzinken 45, 46 auch in und quer zur Achsrichtung 53 des Tragarms 2 geneigt ausgeführt sein. Andererseits kann hierfür jeder Tragarm 2 mit mehreren Doppelfederzinken 43 oder Doppelferderzinken simulierenden Federzinken 45, 46 ausgerüstet sein. Zudem können die Federzinken 45, 46 verschiedenen Querschnitt aufweisen, wobei vorteilhafterweise der innere Federzinken 46, aufgrund des begrenzten Bauraumes innerhalb des Federzinkens 45 über den kleineren Querschnitt verfügt. In nicht dargestellter Weise können bei Anordnung mehrerer Doppelfederzinken 43 oder Doppelfederzinken simulierender Federzinken 45, 46 an einem gekröpft ausgeführten Tragarm 2 die Zinkenspitzen 51, 52 jedes Doppelfederzinkens 43 oder einen Doppelfederzinken simulierender Federzinken 45, 46 die Zinkenspitzen 51, 52 von unterschiedlicher Länge sein, so daß sich, wie in Figur 2 für horizontal am Tragarm 2 angeordnete Federzinken 25, 30 dargestellt, ein gleichmäßiger Abstand A zum Boden 9 aller Zinkenspitzen 51, 52 ergibt.

### Bezugszeichenliste

- 1: Rechkreisel
- 2: Tragarm
- 3: Adapter
- 4: Getriebe
- 5: Achse
- 6: Pfeilrichtung
- 7: Laufradachse
- 8: Laufrad
- 9: Boden
- 10: Federzinken
- 11: Einspannstelle
- 12: Federwicklung
- 13: Zinkenspitze
- 13a: Zinkenspitze
- 14: Adaptierbolzen
- 15: Mutter
- 16: Federzinken
- 17: Querschnitt
- 18: Querschnitt
- 19: Zinkenspitze
- 20: Zinkenspitze
- 21: Achsrichtung
- 22: abgewinkelter Tragarmbereich
- 23: Schraube
- 24: Einspannstelle
- 25: Federzinken
- 26: Anschlag
- 27: Mutter
- 28: Federwicklung
- 29: Zinkenspitze
- 30: Federzinken
- 31: Einspannstelle
- 32: Federwicklung
- 33: Zinkenspitze
- 34: Distanzstück
- 35: Federzinken
- 36: Federzinken
- 37: Einspannstelle
- 38: Einspannstelle
- 39: Federwicklung
- 40: Federwicklung
- 41: Zinkenspitze
- 42: Zinkenspitze
- 43: Doppelfederzinken
- 44: Einspannstelle
- 45: Federzinken
- 46: Federzinken
- 47: Einspannstelle
- 48: Einspannstelle
- 49: Federwicklung
- 50: Federwicklung
- 51: Zinkenspitze
- 52: Zinkenspitze
- 53: Achsrichtung
- 54: Kurvenbahn
- A: Abstand
- F_{Q}: Querkraft
- D1: Innendurchmesser

## Patentansprüche

1. Federzinkenanordnung für landwirtschaftliche Arbeitsmaschine, insbesondere eine Heuwerbungsmaschine, deren als Rechkreisel ausgeführten Arbeitsorgane um eine zum Boden geneigte Drehachse umlaufen und die über radial zur Drehachse verlaufende Tragarme verfügt, wobei jeder Tragarm wenigstens einen lösbar mit dem jeweiligen Tragarm verbundenen, wenigstens eine Einspannstelle, eine Federwicklung und zumindest eine Zinkenspitze aufweisenden Federzinken aufnimmt,
dadurch gekennzeichnet,
daß die Federwicklung oder Federwicklungen (12, 28, 32, 39, 40, 45, 50) des Federzinkens (10, 16, 25, 30, 35, 36, 43, 45, 46) zwischen der Einspannstelle (11, 24, 31, 37, 38, 44, 47, 48) und der Zinkenspitze (13, 13a, 29, 33, 41, 42, 51, 52) angeordnet sind und der Federzinken (10, 16, 25, 30, 35, 36, 43, 45, 46) so am Tragarm (2) befestigt ist, daß die Zinkenspitze (13, 29, 33, 41, 42, 51, 52) bei Einwirkung äußerer Kräfte (F_{Q}) gegen die Lage der Federwicklung oder Federwicklungen (12, 28, 32, 39, 40, 45, 50) ausweichen kann.

2. Federzinkenanordnung für landwirtschaftliche Arbeitsmaschine nach Anspruch 1,
dadurch gekennzeichnet,
daß wenigstens ein Federzinken (10, 16, 25, 30) in radialer Richtung am Tragarm (2) adaptiert ist und die Einspannstelle (11, 24, 31) radial weiter außen liegt als die Federwicklung oder Federwicklungen (12, 28, 32).

3. Federzinkenanordnung für landwirtschaftliche Arbeitsmaschine nach einem oder mehreren der vorhergehenden Ansprüche,
dadurch gekennzeichnet,
daß die Zinkenspitze (19, 20) des Federzinkens (10, 16) radial und/oder tangential zur Drehachse (5) des Rechkreisels (1) geneigt ausgeführt ist.

4. Federzinkenanordnung für landwirtschaftliche Arbeitsmaschine nach einem oder mehreren der vorhergehenden Ansprüche,
dadurch gekennzeichnet,
daß das bodenseitige Ende des Federzinkens (10, 16, 25, 30) annähernd vertikal unter der jeweiligen Einspannstelle (11, 24, 31) angeordnet ist.

5. Federzinkenanordnung für landwirtschaftliche Arbeitsmaschine nach einem oder mehreren der vorhergehenden Ansprüche,
dadurch gekennzeichnet,
daß die Einspannstelle (11, 31) in vertikaler Richtung von einem Adaptierbolzen (23) durchsetzt wird.

6. Federzinkenanordnung für landwirtschaftliche Arbeitsmaschine nach einem oder mehreren der vorhergehenden Ansprüche,
dadurch gekennzeichnet,
daß die Einspannstelle (24) im Endbereich des Tragarms (2) angeordnet ist und in radialer Richtung von einem Adaptierbolzen (23) durchsetzt wird.

7. Federzinkenanordnung für landwirtschaftliche Arbeitsmaschine nach Anspruch 6,
dadurch gekennzeichnet,
daß dem Adaptierbolzen (23) außerhalb der Einspannstelle (24) ein Anschlag (26) zugeordnet ist, dessen Außenkontur größer als der Innendurchmesser (D1) der Federwicklung oder Federwicklungen (28) ist.

8. Federzinkenanordnung für landwirtschaftliche Arbeitsmaschine nach Anspruch 1,
dadurch gekennzeichnet,
daß wenigstens ein Federzinken (35, 36, 43, 45, 46) in vertikaler Richtung am Tragarm (2) adaptiert ist und die Einspannstelle (37, 38, 44, 47, 48) oberhalb der Zinkenspitze (41, 42, 51, 52) liegt.

9. Federzinkenanordnung für landwirtschaftliche Arbeitsmaschine nach einem oder mehreren der vorhergehenden Ansprüche,
dadurch gekennzeichnet,
daß die Zinkenspitze (41, 42, 51, 52) des Federzinkens (35, 36, 43, 45, 46) radial und/oder tangential zur Drehachse (5) des Rechkreisels (1) geneigt ausgeführt sein kann.

10. Federzinkenanordnung für landwirtschaftliche Arbeitsmaschine nach Anspruch 9,
dadurch gekennzeichnet,
daß die Zinkenspitze (41, 42, 51, 52) des Federzinkens (35, 36, 43, 45, 46) in Richtung des radial außen liegenden Endes des Tragarms (2) geneigt ist.

11. Federzinkenanordnung für landwirtschaftliche Arbeitsmaschine nach einem oder mehreren der vorhergehenden Ansprüche,
dadurch gekennzeichnet,
daß wenigstens einem Tragarm (2) mehrere Federzinken (10, 16, 25, 30, 35, 36, 43, 45, 46) zugeordnet sein können.

12. Federzinkenanordnung für landwirtschaftliche Arbeitsmaschine nach Anspruch 11,
dadurch gekennzeichnet,
daß die Federzinken (10, 16, 25, 30, 35, 36) verschiedene Querschnitte (17, 18) aufweisen können.

13. Federzinkenanordnung für landwirtschaftliche Arbeitsmaschine nach Anspruch 12,
dadurch gekennzeichnet,
daß der in radialer Richtung weiter außen am Tragarm (2) angeordnete Federzinken (10, 25, 35) die größere Querschnittsfläche (18) aufweist.

14. Federzinkenanordnung für landwirtschaftliche Arbeitsmaschine nach einem oder mehreren der Ansprüche 11-13,
dadurch gekennzeichnet,
daß die Zinkenspitze (13a, 29, 41) des in radialer Richtung weiter außen am Tragarm (2) angeordneten Federzinkens (10, 25, 35) länger ist als die Zinkenspitze (13, 33, 42) eines in radialer Richtung weiter innen am Tragarm (2) angeordeneten Federzinkens (16, 30, 36).

15. Federzinkenanordnung für landwirtschaftliche Arbeitsmaschine nach einem oder mehreren der Ansprüche 8-13,
dadurch gekennzeichnet,
daß die Einspannstellen (47, 48) von zwei in vertikaler Richtung am Tragarm (2) angeordneten Federzinken (45, 46) von einem gemeinsamen Adaptierbolzen (23) durchsetzt werden.

16. Federzinkenanordnung für landwirtschaftliche Arbeitsmaschine nach Anspruch 15,
dadurch gekennzeichnet,
daß die Federwicklung oder die Federwicklungen (50) des einen Federzinkens (46) innerhalb der Federwicklung oder der Federwicklungen (49) des anderen Federzinkens (45) angeordnet sind.

17. Federzinkenanordnung für landwirtschaftliche Arbeitsmaschine nach Anspruch 15-16,
dadurch gekennzeichnet,
daß die Federzinken (45, 46) durch einen Doppelfederzinken (43) gebildet werden.

18. Federzinkenanordnung für landwirtschaftliche Arbeitsmaschine nach einem oder mehreren der Ansprüche 15-16,
dadurch gekennzeichnet,
daß die miteinander verbundenen Federzinken (45, 46) unterschiedliche Querschnitte (17, 18) aufweisen.

19. Federzinkenanordnung für landwirtschaftliche Arbeitsmaschine nach Anspruch 18,
dadurch gekennzeichnet,
daß der innere Federzinken (46) die kleinere Querschnittsfläche (17) aufweist.

20. Federzinkenanordnung für landwirtschaftliche Arbeitsmaschine nach einem oder mehreren der vorhergehenden Ansprüche,
dadurch gekennzeichnet,
daß der die Einspannstelle (11, 24, 31, 37, 38, 44, 47, 48) durchsetzende Adaptierbolzen (23) als Schraubverbindung (15, 23, 27) ausgeführt ist.
